# EUROPÄISCHE PATENTSCHRIFT

(11) **EP 1 032 777 B1**
(45) Veröffentlichungstag und Bekanntmachung des Hinweises auf die Patenterteilung: **04.10.2001**
(21) Anmeldenummer: 98961215.5
(22) Anmeldetag: 17.11.1998
(51) Int. Cl.: F16F 13/26

(54) **HYDRAULISCH DÄMPFENDES ZWEIKAMMER-MOTORLAGER**
TWO-CHAMBER ENGINE MOUNTING WITH HYDRAULIC DAMPING
SUPPORT DE MOTEUR A DEUX CHAMBRES A AMORTISSEMENT HYDRAULIQUE

(30) Priorität: 21.11.1997 DE 19751783
(43) Veröffentlichungstag der Anmeldung: 06.09.2000
(73) Patentinhaber: Trelleborg Automotive Technical Centre GmbH, 56203 Höhr-Grenzhausen (DE)
(72) Erfinder: GUGSCH, Mathias, D-56587 Strassenhaus (DE); PFENNING, Andreas, D-56410 Montabaur (DE)
(74) Vertreter: Preissner, Nicolaus, Dipl.-Ing.
(86) Internationale Anmeldenummer: EP9807377
(87) Internationale Veröffentlichungsnummer: WO9927277

(56) Entgegenhaltungen:
- EP-A- 0 461 024
- EP-A- 0 611 216
- DE-A- 19 620 219
- FR-A- 2 574 031
- US-A- 4 836 515

## Beschreibung

Die vorliegende Erfindung betrifft ein hydraulisch dämpfendes Zweikammer-Motorlager, mit einer Arbeitskammer und einer Ausgleichskammer, die mit einer hydraulischen Flüssigkeit gefüllt sind und durch eine Zwischenplatte getrennt sind, wobei in der Zwischenplatte ein Überströmkanal, mindestens ein schaltbarer Bypasskanal und eine Entkopplungsmembran angeordnet sind.

Bei derartigen, beispielsweise aus der US-A-4 836 515 bekannten Hydrolagern wird die statische Last durch eine die Arbeitskammer umgebende Tragfeder aufgenommen. Die hydraulische Dämpfung wird durch die im Überströmkanal oszillierende Flüssigkeitssäule bewirkt. Die Entkopplungsmembran hat bei Hydrolagern die Aufgabe, die eingeleiteten Schwingungen geringer Amplitude hydraulisch zu entkoppeln, d.h. den Überströmkanal nicht wirksam werden zu lassen. Damit werden sämtliche Dämpfungseffekte vermieden, wodurch das Lager bei kleinen Amplituden ideal weich reagiert. Erst wenn die Entkopplungsmembran weitgehend oder vollständig verformt und/oder am Anschlag ist, strömt auch Flüssigkeit durch den Überströmkanal und bewirkt eine hydraulische Dämpfung sowie eine erhöhte Steifigkeit. Die Entkopplungsmembran soll geringe Amplituden über einen möglichst großen Frequenzbereich entkoppeln, insbesondere akustisch relevante Amplituden.

Der Bypasskanal wird in bestimmten Betriebszuständen freigegeben, um eine Anpassung des Lagers zu erreichen. Durch das Freigeben des Bypasskanals wird eine Absenkung der dynamischen Steifigkeit unter die statische Steifigkeit erreicht. Dies wird auch als Unterschwingen bezeichnet. Ein Unterschwingen ist besonders im Leerlauf von Vorteil, da das Lager dann die besonderen, im Leerlauf des Motors entstehenden Schwingungen besser isolieren und entkoppeln kann.

Werden Entkopplungsmembran und Bypasskanal zusammen in einem Lager eingesetzt, so müssen sie aufeinander abgestimmt werden. Diese Abstimmung führt allerdings zu insgesamt unbefriedigenden Ergebnissen. Grund ist, daß die Amplitude der Leerlaufschwingungen nur wenig größer ist als die der akustisch relevanten Schwingungen. Eine optimale Abstimmung bei freigegebenem Bypasskanal führt zu schlechten Ergebnissen bei verschlossenem Bypasskanal. Es kommt zu einer schlechten Akustik oder unbefriedigender Funktion.

Ausgehend von dieser Problematik liegt der vorliegenden Erfindung die Aufgabe zugrunde, ein hydraulisch dämpfendes Zweikammer-Motorlager zu schaffen, bei dem der Bypasskanal in einfacher Weise schaltbar ist.

Zur Lösung dieser Aufgabe ist erfindungsgemäß vorgesehen, daß die Entkopplungsmembran mittels eines zugeordneten Aktors drehbar ist, wobei in einer ersten Drehstellung die Entkopplungsmembran den Bypasskanal verschließt und in einer zweiten Drehstellung freigibt.

Bei freigegebenem Bypasskanal wird somit eine Dämpfung und Entkopplung praktisch ausschließlich durch den Bypasskanal erreicht. Die Auslegung für diesen Betriebszustand kann unabhängig von der Entkopplungsmembran erfolgen. Damit kann die Entkopplungsmembran optimal für den Einsatz bei verschlossenem Bypasskanal ausgelegt werden. Es wird eine verbesserte Anpassung an beide Zustände des Lagers möglich. Mit der drehbaren Entkopplungsmembran wird bei einfachem Aufbau eine Schaltung des Bypasskanals bewirkt.

Vorteilhafte Ausgestaltungen der Erfindung sind in den Unteransprüchen aufgeführt.

In weiterer Ausgestaltung sind der Entkopplungsmembran Mittel zugeordnet, die die Entkopplungsmembran in der zweiten Drehstellung in Axialrichtung fixieren. Hierdurch wird erreicht, daß die Entkopplungsmembran bei geöffnetem Bypasskanal blockiert ist und somit keinen Beitrag mehr leistet.

Der Aktor für die Verdrehung der Membran kann in der Ausgleichskammer oder in der Arbeitskammer angeordnet sein. Der Aktor kann direkt an der Zwischenplatte oder einem separaten Tragteil befestigt sein. Er ist vorteilhaft als Elektromotor oder als elektromagnetisches Stellglied ausgebildet.

Vorteilhaft ist die Entkopplungsmembran auf einer Welle des Aktors drehfest, aber in Axialrichtung verschieblich angeordnet. Die Entkopplungsmembran kann rund, oval oder sternförmig ausgebildet sein und elastisch oder steif ausgebildet sein.

Je nach der Formgebung kann die Entkopplungsmembran zum Freigeben des Bypasskanals mit einer oder mehreren Öffnungen versehen sein. Vorteilhaft entspricht die Zahl dieser Öffnungen der Anzahl der Bypasskanäle. Durch die Verdrehung gelangen die Öffnungen in den Bereich des mindestens einen Bypasskanals und geben diesen frei. Das Verschließen erfolgt durch ein erneutes Verdrehen der Entkopplungsmembran, entweder in Gegenrichtung oder weiter in dieselbe Drehrichtung.

Wird eine runde Membran verwendet, so sind diese Öffnungen zwingend erforderlich. Bei einer ovalen oder sternförmigen Membran dienen die Stellen größeren Durchmessers zum Verschließen des mindestens einen Bypasskanals.

Zum Fixieren der Entkopplungsmembran in ihrer Axialrichtung sind auf der Entkopplungsmembran Vorsprünge vorgesehen, die mit Engstellen der Zwischenplatte zusammenwirken. Die Höhe der Engstellen ist geringer als die Gesamthöhe von Entkopplungsmembran und Vorsprüngen. Bei der Verdrehung der Entkopplungsmembran gelangen die Vorsprünge in den Bereich der Engstellen und fixieren die Entkopplungsmembran. Eine Bewegung in Richtung der Mittelachse der Entkopplungsmembran oder ein elastisches Nachgeben wird zuverlässig verhindert. Die Dämpfungswirkung der Entkopplungsmembran bei geöffnetem Bypasskanal wird hierdurch ausgeschaltet.

Die Vorsprünge können verschiedene Formen aufweisen, beispielsweise rund, halbrund oder wulstartig. Sie können auf einer oder beiden Seiten der Entkopplungsmembran angeordnet sein.

Nachfolgend wird die Erfindung anhand von Ausführungsbeispielen weiter erläutert, die schematisch in der Zeichnung dargestellt sind. Dabei zeigen:
- Figur 1: einen Vertikalschnitt durch ein erfindungsgemäßes hydraulisch dämpfendes Zweikammer-Motorlager,
- Figur 2: einen teilweisen Vertikalschnitt einer zweiten Ausführungsform,
- Figur 3: eine Ansicht wie Figur 2 einer dritten Ausführungsform,
- Figur 4 bis 6: drei unterschiedliche Ausführungsformen für die Zwischenplatte und die Entkopplungsmembran in der Draufsicht,
- Figur 7 bis 11: fünf unterschiedliche Ausführungsformen für die Mittel zum Fixieren der Entkopplungsmembran, und
- Figur 12: eine Draufsicht auf eine Entkopplungsmembran mit unterschiedlichen Mitteln für die Fixierung.

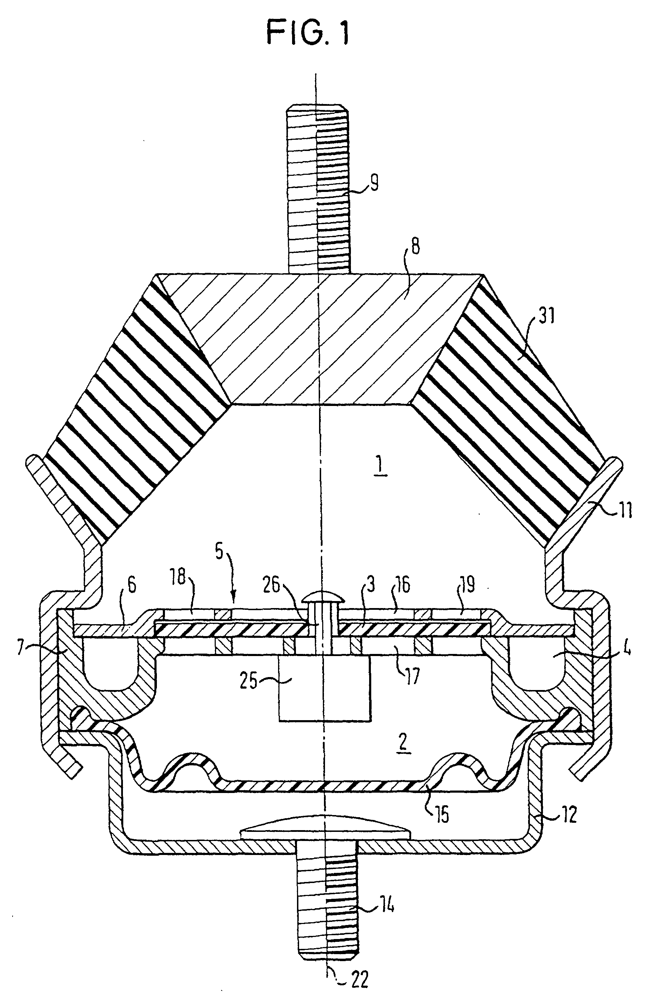

In den Figuren 1 bis 3 werden drei unterschiedliche Bauarten eines erfindungsgemäßen hydraulisch dämpfenden Zweikammer-Motorlagers dargestellt. Identische Bauteile oder Bauteile gleicher Funktion werden hierbei mit denselben Bezugszeichen versehen und nur einmal beschrieben.

Das erfindungsgemäße Zweikammer-Motorlager weist eine Arbeitskammer 1 und eine Ausgleichskammer 2 auf, die über eine Zwischenplatte 6, 7 getrennt sind. Die Zwischenplatte ist zweiteilig ausgebildet und weist ein Unterteil 6 und ein Deckelteil 7 auf. Zur Verbindung zwischen den Kammern 1, 2 dient ein Überströmkanal 4, der spiralförmig in der Zwischenplatte verläuft. Die Entkopplungsmembran 3 ist in einem Käfig 5 aufgenommen, der in der Zwischenplatte 6, 7 angeordnet ist.

Die Arbeitskammer 1 wird von einer Tragfeder 31 aus gummielastischem Material umgeben, in der ein Lagerkern 8 aufgenommen ist. Von dem Lagerkern 8 ragt ein Befestigungsbolzen 9 ab. Die Tragfeder 31 stützt sich an einem zylindrischen Metallring 11 ab, der sowohl die Teile 6, 7 der Zwischenplatte als auch ein Gehäuse 12 einfaßt. An dem Gehäuse 12 ist ein Befestigungsbolzen 14 festgelegt. In das Gehäuse 12 ist die Ausgleichskammer 2 integriert. Sie ist über eine gummielastische Membran 15 nach unten abgeschlossen.

Sowohl die Arbeitskammer 1 als auch die Ausgleichskammer 2 sind mit einer hydraulischen Flüssigkeit gefüllt. Die Entkopplungsmembran 3 wird von beiden Kammern 1, 2 über in der Zwischenplatte 6, 7 eingebrachte Öffnungen 16, 17 mit Flüssigkeitsdruck beaufschlagt. Es sind weiter zwei Bypasskanäle 18, 19 vorhanden, die radial innerhalb des Überströmkanals 4 liegen. In den Figuren 1 bis 3 sind die Bypasskanäle 18, 19 durch die Entkopplungsmembran 3 verschlossen.

In der Arbeitskammer 1 kann ein in der Zeichnung nicht dargestellter Panscher vorgesehen sein, der am Lagerkern 8 festgelegt ist und sich zur Begrenzung der Amplitude an einem Anschlag anlegen kann.

Die Entkopplungsmembran 3 ist mit einer Welle 26 eines Aktors 25 drehfest, aber in Axialrichtung der Welle 26 verschieblich verbunden. Sie ist in dem Käfig 5 der Zwischenplatte 6, 7 aufgenommen und verdrehbar.

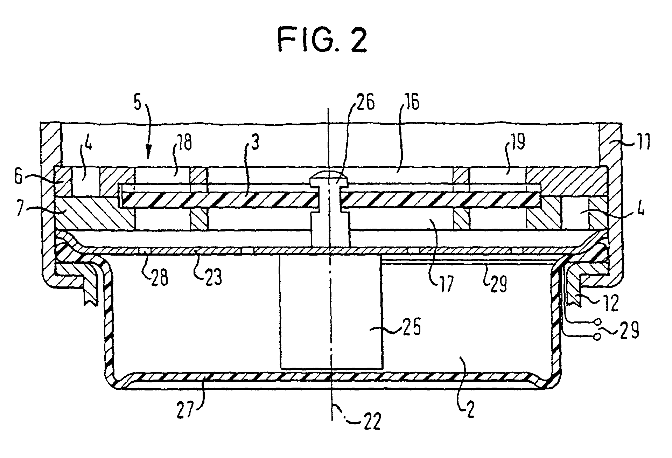

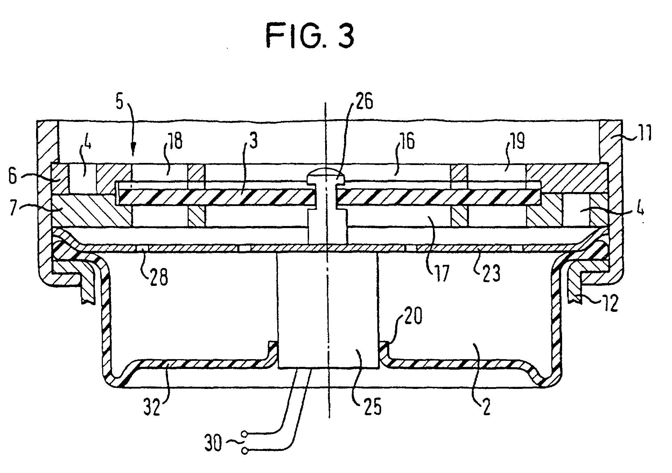

Der Aktor 25, insbesondere ein Elektromotor, wird über Anschlüsse 29, 30 mit Energie versorgt. In Figur 1 ist der Aktor 25 an der unteren Zwischenplatte 7 befestigt, in den Figuren 2 und 3 ist eine zusätzliche Trägerplatte 23 zur Befestigung des Aktors 25 vorgesehen. Die Trägerplatte 23 weist Ausnehmungen 28 auf, um den Durchtritt von Flüssigkeit zu der Entkoppiungsmembran 3 zu ermöglichen. In Figur 2 laufen die Anschlüsse 29 durch die Ausgleichskammer 2 hindurch, wobei die gummielastische Membran 27 durchgehend ausgebildet ist. In Figur 3 ist die gummielastische Membran 32 dichtend am Aktor 25 angebracht, wobei die Anschlüsse 30 vollständig außerhalb der Ausgleichskammer 2 verlaufen. Alternativ kann der Innenrand 20 der gummielastischen Membran 32 auch an der Trägerplatte 23 angeordnet sein. Hierdurch wird erreicht, daß der Aktor 25 nicht mit hydraulischer Flüssigkeit in Kontakt kommt.

Im Betrieb wird beispielsweise die Arbeitskammer 1 komprimiert, wodurch Hydraulikflüssigkeit über den Überströmkanal 4 überströmt. Bei nur geringen Amplituden wird der Druckunterschied zwischen den Kammern 1, 2 durch eine Verschiebung oder eine elastische Verformung der Entkopplungsmembran 3 ausgeglichen. Bei größeren Amplituden strömt die Flüssigkeit durch den Überströmkanal 4 und führt so den Druckausgleich herbei. Für kleine Amplituden ist somit das Verhalten der Entkopplungsmembran 3, für große Amplituden das des Überströmkanals 4 entscheidend.

Bei einer Drehung der Entkopplungsmembran 3 um einen bestimmten Winkel durch den Aktor 25 werden die Bypasskanäle 18, 19 freigegeben. Die Entkopplungsmembran 3 wird gleichzeitig mit noch näher zu beschreibenden Mitteln 44 fixiert, so daß keine Bewegung in axialer Richtung oder ein elastischer Ausgleich mehr möglich ist. In dieser Stellung übt die Entkopplungsmembran 3 keine Entkopplungsfunktion mehr aus, so daß jetzt für kleine Amplituden die Bypasskanäle 18, 19 maßgeblich sind.

Zum Verschließen der Bypasskanäle 18, 19 wird die Entkopplungsmembran 3 über den Aktor 25 und die Welle 26 erneut verdreht. Die Verdrehung kann in dieselbe Drehrichtung wie beim Freigeben oder in Gegenrichtung hierzu erfolgen.

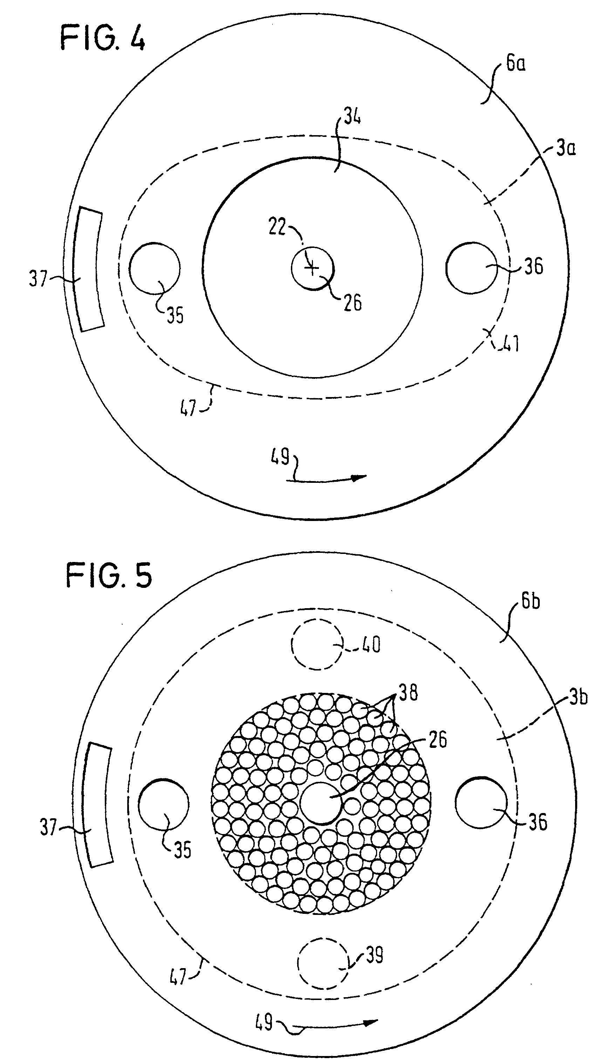

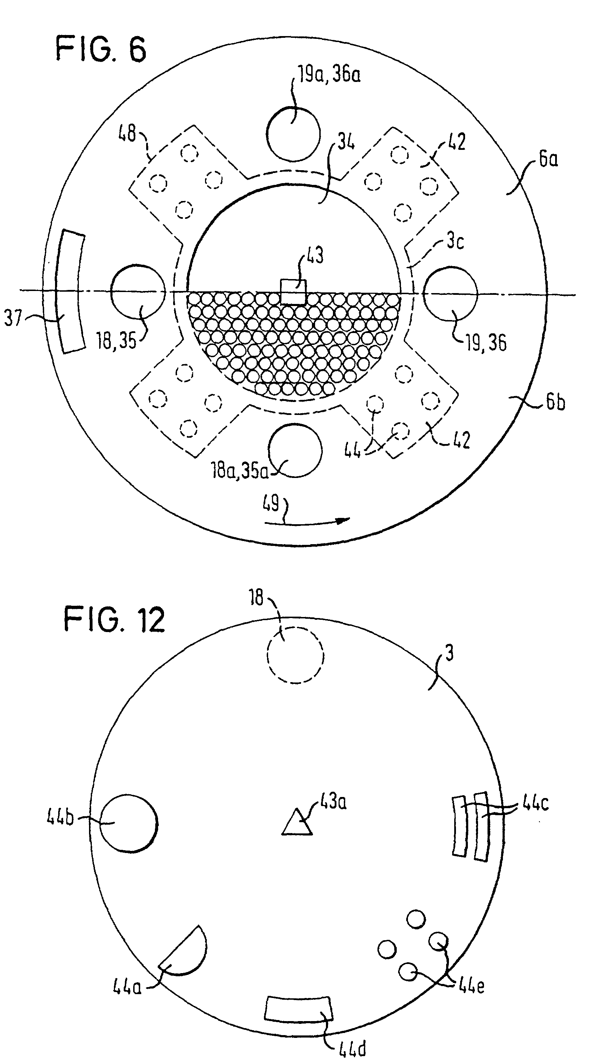

Die Figuren 4 bis 6 zeigen drei unterschiedliche Ausführungen für die obere Zwischenplatte 6 und die Entkopplungsmembran 3 in der Draufsicht. In den Figuren 4 und 5 sind die Bypasskanäle 18, 19 durch die Entkopplungsmembran 3 verschlossen, in Figur 6 freigegeben. Die Entkopplungsmembran 3 befindet sich in den Figuren 4 und 5 entsprechend in ihrer ersten Drehstellung 47, in Figur 6 in ihrer zweiten Drehstellung 48. Sie ist in Pfeilrichtung 49 und bevorzugt auch in Gegenrichtung hierzu um die Mittelachse 22 drehbar.

In Figur 4 wird eine obere Zwischenplatte 6a verwendet, die eine zentrale kreisrunde Ausnehmung aufweist. Die Zwischenplatte 6a ist mit beidseits der Ausnehmung 34 angeordneten Öffnungen 35, 36 versehen, die die Mündungen der Bypasskanäle 18, 19 bilden. Sie weist weiter einen Einlaß 37 für den Überströmkanal 4 auf.

Die strichpunktiert dargestellte Entkopplungsmembran 3a ist im wesentlichen oval ausgebildet. Bei einer Verdrehung um die Mittelachse 22 gelangen die abragenden Enden 41 außer Eingriff mit den Bypasskanälen 18, 19 und geben diese frei. Eine erneute Drehung verschließt die Bypasskanäle 18, 19. Bei dieser Entkopplungsmembran 3a handelt es sich um ein relativ steifes Gebilde aus entsprechend hartem Gummi oder Kunststoff oder um eine mit einer Gummischicht ummantelte Metall- oder Kunststoffscheibe, um bei freigegebenen Bypasskanälen keine Absenkung der Steifigkeit der Arbeitskammer 1 durch eine biegeweiche Entkopplungsmembran hervorzurufen.

In Figur 5 ist eine im wesentlichen kreisförmige Entkopplungsmembran 3b dargestellt. Diese weist Öffnungen 39, 40 auf, die bei einem Verdrehen wie oben beschrieben in den Bereich der Bypasskanäle 18, 19 gelangen und diese freigeben. Die Zwischenplatte 6b kann statt einer großen Ausnehmung 34 auch mit einer Vielzahl kleiner Ausnehmungen 38 versehen sein. Diese Ausbildung wird bevorzugt, wenn die verwendete Entkopplungsmembran 3b biegeweich ist. Eine derartige biegeweiche Entkopplungsmembran 3b ist einfacher und kostengünstiger zu fertigen als eine relativ steife Entkopplungsmembran 3a, wie in Figur 4 dargestellt. Das Vorsehen einer Vielzahl kleiner Öffnungen 38 anstatt einer großen Ausnehmung 34 verhindert eine Absenkung der Steifigkeit der Arbeitskammer 1 bei Verwendung einer biegeweichen Entkopplungsmembran 3b.

Figur 6 zeigt eine sternförmige Entkopplungsmembran 3c, die vier radial abragende Arme 42 aufweist. In der oberen Hälfte ist eine Zwischenplatte 6a, in der unteren eine Zwischenplatte 6b angedeutet. Vorteilhaft entspricht die Anzahl der Arme 42 der Anzahl der Bypasskanäle 18, 19. In der gezeigten Ausführungsform sind vier Bypasskanä1e 18, 18a, 19, 19a mit zugehörigen Öffnungen 35, 35a, 36, 36a vorhanden. Die Zahl dieser Öffnungen entspricht der Zahl der Arme 42.

In der dargestellten Drehstellung 48 sind die Bypasskanäle 18, 18a, 19, 19a freigegeben und die Entkopplungsmembran 3c axial fixiert.

Der Außendurchmesser der Entkopplungsmembran 3c ist so gewählt, daß die Bypasskanäle 18, 19 zuverlässig von den Armen 42 verschlossen werden können. Es ist auch die polygonförmige Öffnung 43 in der Mitte der Entkopplungsmembran 3c dargestellt, die die Welle 26 des Aktors 25 aufnimmt.

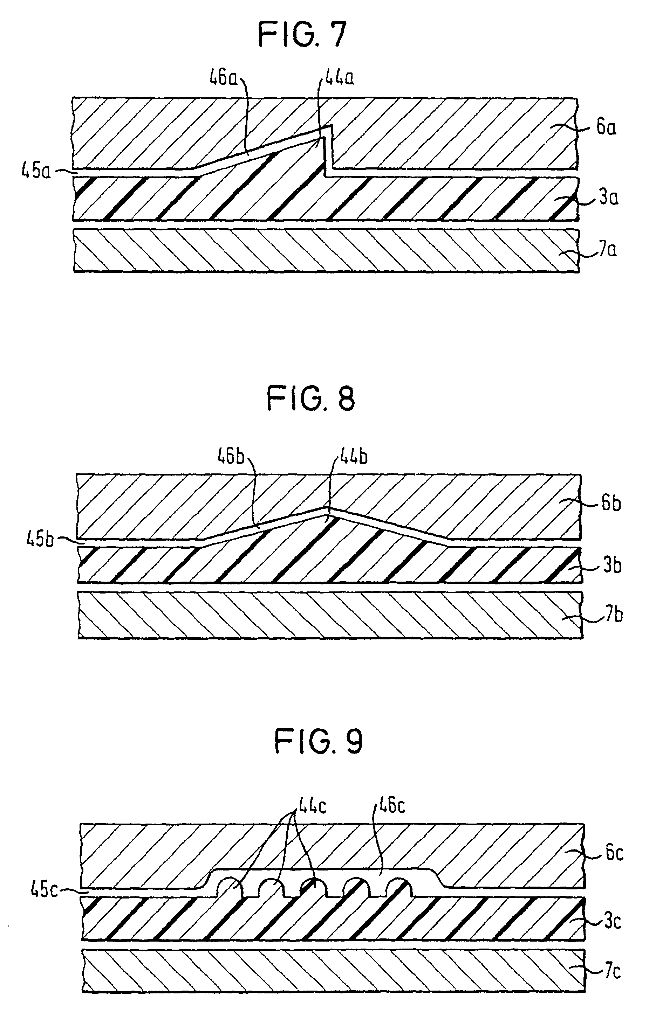

Jeder Arm 42 ist mit einem oder mehreren Vorsprüngen 44 versehen, die zur Fixierung der Entkopplungsmembran 3c dienen. Die Funktion der Vorsprünge 44 und deren Wechselwirkung mit den Zwischenplatten 6, 7, die den Käfig 5 bilden, wird anhand der Figuren 7 bis 11 erläutert.

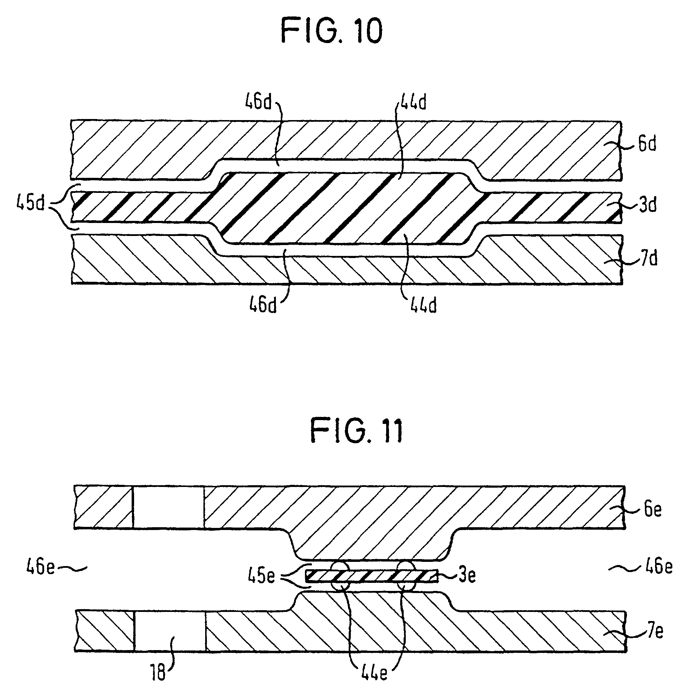

Die Figuren 7 bis 11 zeigen fünf unterschiedliche Ausführungsformen für die Mittel zum Fixieren der Entkopplungsmembran 3. In sämtlichen Ausführungsbeispielen ist die Entkopplungsmembran 3 mit Vorsprüngen 44 versehen, die von der Oberseite abragen. Eine oder beide Zwischenplatten 6, 7 weisen Engstellen 45 und Freiräume 46 auf. Die Engstellen 45 sind so bemessen, daß ihre lichte Höhe geringer ist als die Gesamthöhe von Entkopplungsmembran 3 und Vorsprüngen 44. In den Figuren 7 bis 10 befindet sich die Entkopplungsmembran in ihrer ersten Drehstellung 47, in Figur 11 in der zweiten Drehstellung 48.

In Figur 7 wird ein im Querschnitt etwa dreieckiger Vorsprung 44a gezeigt. Entsprechend weist die obere Zwischenplatte 6 einen etwa dreieckigen Freiraum 46a auf. Die Engstelle 45a wird in den Bereichen gebildet, in denen keine Freiräume 46a vorliegen. Figur 8 zeigt eine ähnliche Ausführungsform, in der ein doppelt dreieckförmiger Vorsprung 44b verwendet wird, der mit einem doppelt dreieckförmigen Freiraum 46b zusammenwirkt. Figur 9 zeigt mehrere kreisrunde oder wulstartige Vorsprünge 44c, zusammen mit einem entsprechenden Freiraum 46c und einer Engstelle 45c.

In den Figuren 7 bis 9 ist die Entkopplungsmembran 3 axial nicht fixiert. Sie kann somit die vorgesehene Entkopplungsfunktion übernehmen. Die Bypasskanäle 18, 19 sind in diesen Figuren verschlossen. Bei einer Verdrehung der Entkopplungsmembran 3 gelangen die Vorsprünge 44a, 44b, 44c in den Bereich der Engstellen 45a, 45b, 45c. Die Bypasskanäle 18, 19 werden freigegeben, wobei gleichzeitig die Entkopplungsmembran axial fixiert wird.

Figuren 10 und 11 zeigen Vorsprünge 44c, 44d, die auf beiden Seiten der Entkopplungsmembran 3 angebracht sind. Entsprechend sind auch Freiräume 46d, 46e in beiden Zwischenplatten 6, 7 vorgesehen. In Figur 10 ist die Entkopplungsmembran 3 wie in den Figuren 7 bis 9 nicht axial fixiert, in Figur 11 befinden sich die Vorsprünge 46e im Bereich der Engstellen 45e. Die Entkopplungsmembran 3 ist also in Figur 11 axial fixiert und befindet sich in der zweiten Drehstellung 48, wobei die Bypasskanäle 18, 19 freigegeben sind.

Figur 12 zeigt eine Draufsicht auf eine Entkopplungsmembran 3, die mit den in den Figuren 7 bis 11 dargestellten Vorsprüngen 44a bis 44e versehen ist. In der Praxis wird es bevorzugt, nur eine Art von Vorsprüngen 44 je Entkopplungsmembran 3 zu verwenden. Zur Orientierung ist auch ein Bypasskanal 18 in Strichlinien dargestellt.

Der Vorsprung 44a hat einen in der Draufsicht im wesentlichen halbkreisförmigen Grundriß. Der Vorsprung 44b setzt sich aus zwei Vorsprüngen 44a zusammen. Die Vorsprünge 44c bestehen aus mehreren konzentrisch zur Entkopplungsmembran 3 verlaufenden Wülsten. Der Vorsprung 44d besteht aus einem derartigen, größeren Wulst. Selbstverständlich können die Vorsprünge 44c, 44d auch radial verlaufend ausgebildet sein. Die Vorsprünge 44e entsprechen denen der Figur 6 und weisen jeweils einen kreisrunden Querschnitt auf.

Die Entkopplungsmembran 3 kann auch mit einer dreieckigen oder polygonförmigen Öffnung 43a zur Aufnahme der Welle 26 des Aktors 25 versehen sein. Hierdurch wird die Entkopplungsmembran 3 drehfest jedoch axial verschieblich an der Welle 26 festgelegt.

Die Vorsprünge 44a bis 44e weisen etwa denselben Abstand zur Mitte der Entkopplungsmembran 3 auf wie der Bypasskanal 18. Dieser Abstand kann aber auch größer oder kleiner ausgebildet sein.

## Patentansprüche

1. Hydraulisch dämpfendes Zweikammer-Motorlager, insbesondere für Kraftfahrzeuge, mit einer Arbeitskammer (1) und einer Ausgleichskammer (2), die mit einer hydraulischen Flüssigkeit gefüllt sind und durch eine Zwischenplatte (6, 7) getrennt sind, wobei in der Zwischenplatte (6, 7) ein Überströmkanal (4), mindestens ein schaltbarer Bypasskanal (18, 19) und eine Entkopplungsmembran (3) angeordnet sind, **dadurch gekennzeichnet, daß** die Entkopplungsmembran (3) mittels eines zugeordneten Aktors (25) drehbar ist, wobei in einer ersten Drehstellung (47) die Entkopplungsmembran (3) den Bypasskanal (18, 19) verschließt und in einer zweiten Drehstellung (48) freigibt.

2. Zweikammer-Motorlager nach Anspruch 1, **dadurch gekennzeichnet, daß** der Entkopplungsmembran (3) Mittel (44, 45) zugeordnet sind, die die Entkopplungsmembran (3) in der zweiten Drehstellung (48) in Axialrichtung fixieren.

3. Zweikammer-Motorlager nach Anspruch 1 oder 2, **dadurch gekennzeichnet, daß** der Aktor (25) in der Ausgleichskammer (2) oder in der Arbeitskammer (1) angeordnet ist.

4. Zweikammer-Motorlager nach einem der Ansprüche 1 bis 3, **dadurch gekennzeichnet, daß** der Aktor (25) an der Zwischenptatte (6, 7) oder einem getrennten Tragteil (23) befestigt ist.

5. Zweikammer-Motorlager nach einem der Ansprüche 1 bis 4, **dadurch gekennzeichnet, daß** der Aktor (25) als elektrisches, elektromagnetisches oder pneumatisches Stellglied ausgebildet ist.

6. Zweikammer-Motorlager nach einem der Ansprüche 1 bis 5, **dadurch gekennzeichnet, daß** die Entkopplungsmembran (3) auf einer Welle (26) des Aktors (25) drehfest, aber in Richtung der Mittelachse (22) verschieblich angeordnet ist.

7. Zweikammer-Motorlager nach einem der Ansprüche 1 bis 6, **dadurch gekennzeichnet, daß** die Entkopplungsmembran (3) rund, oval oder sternförmig ausgebildet ist.

8. Zweikammer-Motorlager nach einem der Ansprüche 1 bis 7, **dadurch gekennzeichnet, daß** die Entkopplungsmembran (3) steif oder elastisch ausgebildet ist.

9. Zweikammer-Motorlager nach einem der Ansprüche 1 bis 8, **dadurch gekennzeichnet, daß** die Entkopplungsmembran (3) mit einer oder mehreren Öffnungen (39, 40) versehen ist.

10. Zweikammer-Motorlager nach einem der Ansprüche 1 bis 9, **dadurch gekennzeichnet, daß** die Mittel (44, 45) zum Fixieren der Entkopplungsmembran (3) in Form eines oder mehrerer Vorsprünge (44) auf der Entkopplungsmembran (3) ausgebildet sind und mit Engstellen (45) an der Zwischenplatte (6, 7) zusammenwirken, deren Höhe geringer ist als die Gesamthöhe von Entkopplungsmembran (3) und Vorsprüngen (44).

11. Zweikammer-Motorlager nach Anspruch 10, **dadurch gekennzeichnet, daß** die Vorsprünge (44) rund, halbrund oder wulstartig ausgebildet sind.

12. Zweikammer-Motorlager nach Anspruch 10 oder 11, **dadurch gekennzeichnet, daß** die Vorsprünge (44) auf einer oder auf beiden Seiten der Entkopplungsmembran (3) angebracht sind.

## Claims

1. A hydraulic damping two-chamber engine mount, especially for a vehicle, including a working chamber (1) and a compensating chamber (2) filled with a hydraulic fluid and separated by an intermediate plate (6, 7) in which an overflow passage (4), at least one switchable bypass (18, 19) and an isolating diaphragm (3) are arranged, **characterized in that** said isolating diaphragm (3) is rotatable by means of an assigned actor (25), in a first rotative position (47) said isolating diaphragm (3) closing off said bypass (18, 19) and opening up said bypass (18, 19) in a second rotative position (48).

2. The two-chamber engine mount as set forth in claim 1, **characterized in that** means (44, 45) are assigned to said isolating diaphragm (3) which locate said isolating diaphragm (3) axially in said second rotative position (48).

3. The two-chamber engine mount as set forth in claim 1 or 2, **characterized in that** said actor (25) is arranged in said compensating chamber (2) or in said working chamber (1).

4. The two-chamber engine mount as set forth in any of the claims 1 to 3, **characterized in that** said actor (25) is secured to said intermediate plate (6, 7) or to a separate mounting part (23).

5. The two-chamber engine mount as set forth in any of the claims 1 to 4, **characterized in that** said actor (25) is configured to advantage as an electric, solenoid or pneumatic actuator.

6. The two-chamber engine mount as set forth in any of the claims 1 to 5, **characterized in that** said isolating diaphragm (3) is arranged non-rotatively on a shaft (26) of said actor (25) but shiftable in the direction of the longitudinal centerline (22).

7. The two-chamber engine mount as set forth in any of the claims 1 to 6, **characterized in that** said isolating diaphragm (3) is configured round, oval or star-shaped.

8. The two-chamber engine mount as set forth in any of the claims 1 to 7, **characterized in that** said isolating diaphragm (3) is configured flexible or rigid.

9. The two-chamber engine mount as set forth in any of the claims 1 to 8, **characterized in that** said isolating diaphragm (3) is provided with one or more ports (39, 40).

10. The two-chamber engine mount as set forth in any of the claims 1 to 9, **characterized in that** said means (44, 45) for locating said isolating diaphragm (3) are configured in the form of one or more protuberances (44) on said isolating diaphragm (3) which cooperate with constrictions (45) in said intermediate plate (6, 7), the height of said constrictions (45) being less than the overall height of said isolating diaphragm (3) and protuberances (44).

11. The two-chamber engine mount as set forth in claim 10, **characterized in that** said protuberances (44) are round, half-round or bead-shaped.

12. The two-chamber engine mount as set forth in claim 10 or 11, **characterized in that** said protuberances (44) are arranged on one or both sides of said isolating diaphragm (3).

## Revendications

1. Support de moteur à deux chambres à amortissement hydraulique, en particulier pour véhicules automobiles, comportant une chambre de travail (1) et une chambre de compensation (2) qui sont remplies avec un liquide hydraulique et séparées par une plaque intermédiaire (6, 7), avec un canal de déversement (4), au moins un canal de by-pass commutable (18, 19) et une membrane de découplage (3) agencés dans la plaque intermédiaire (6, 7), **caractérisé en ce que** la membrane de découplage (3) peut être tournée au moyen d'un actionneur associé (25), la membrane de découplage (3) refermant le canal de by-pass (18, 19) dans une première position de rotation (47) et le libérant dans une seconde position de rotation (48).

2. Support de moteur à deux chambres selon la revendication 1, **caractérisé en ce qu'**à la membrane de découplage (3) sont associés des moyens (44, 45) qui fixent en direction axiale la membrane de découplage (3) dans la seconde position de rotation (48).

3. Support de moteur à deux chambres selon l'une ou l'autre des revendications 1 et 2, **caractérisé en ce que** l'actionneur (25) est agencé dans la chambre de compensation (2) ou dans la chambre de travail (1).

4. Support de moteur à deux chambres selon l'une quelconque des revendications 1 à 3, **caractérisé en ce que** l'actionneur (25) est fixé sur la plaque intermédiaire (6, 7) ou sur un élément porteur séparé (23).

5. Support de moteur à deux chambres selon l'une quelconque des revendications 1 à 4, **caractérisé en ce que** l'actionneur (25) est réalisé sous forme d'organe de positionnement électrique, électromagnétique ou pneumatique.

6. Support de moteur à deux chambres selon l'une quelconque des revendications 1 à 5, **caractérisé en ce que** la membrane de découplage (3) est agencée solidairement en rotation sur un arbre (26) de l'actionneur (25), mais mobile en translation en direction de l'axe central (22).

7. Support de moteur à deux chambres selon l'une quelconque des revendications 1 à 6, **caractérisé en ce que** la membrane de découplage (3) est réalisée arrondie, ovale ou en forme d'étoile.

8. Support de moteur à deux chambres selon l'une quelconque des revendications 1 à 7, **caractérisé en ce que** la membrane de découplage (3) est réalisée rigide ou élastique.

9. Support de moteur à deux chambres selon l'une quelconque des revendications 1 à 8, **caractérisé en ce que** la membrane de découplage (3) est pourvue d'une ou plusieurs ouvertures (39, 40).

10. Support de moteur à deux chambres selon l'une quelconque des revendications 1 à 9, **caractérisé en ce que** les moyens (44, 45) pour fixer la membrane de découplage (3) sont réalisés sous forme d'une ou plusieurs saillies (44) sur la membrane de découplage (3) et coopèrent avec des rétrécissements (45) sur la plaque intermédiaire (6, 7), dont la hauteur est inférieure à la hauteur totale de la membrane de découplage (3) et des saillies (44).

11. Support de moteur à deux chambres selon la revendication 10, **caractérisé en ce que** les saillies (44) sont agencées en forme circulaire, demi-circulaire ou en forme de bourrelet.

12. Support de moteur à deux chambres selon l'une ou l'autre des revendications 10 et 11, **caractérisé en ce que** les saillies (44) sont agencées sur un ou sur deux côtés de la membrane de découplage (3).
